# FASCICULE DE BREVET EUROPEEN

(11) **EP 1 404 093 B1**
(45) Date de publication et mention de la délivrance du brevet: **10.01.2007**
(21) Numéro de dépôt: 03292346.8
(22) Date de dépôt: 25.09.2003
(51) Int. Cl.: H04M 3/493, H04M 3/22, H04M 1/247, G10L 19/00

(54) **Procédé d'accès à un service via un réseau de téléphonie mobile prenant en compte la qualité de la liaison "données"**
Verfahren zum Zugriff auf einen Dienst mittels eines mobilen Telekommunikationsnetzes unter Berücksichtigung der Verbindungsqualität
Method for accessing a service via a mobile network considering the quality of the data connection

(30) Priorité: 26.09.2002 FR 0211947
(43) Date de publication de la demande: 31.03.2004
(73) Titulaire: Bouygues Telecom, 92100 Boulogne Billancourt (FR)
(72) Inventeur: Fournier, Jean-Philippe, 94086 Sunnyvale (US)
(74) Mandataire: Callon de Lamarck, Jean-Robert

(56) Documents cités:
- EP-A- 0 676 882

## Description

L'invention concerne le domaine des services offerts par les réseaux de téléphonie mobile. Ces services consistent par exemple en la recherche d'informations dans des bases de données, la navigation sur Internet, sur le WEB, le WAP ou l'I-Mode, la commande de produits, etc.

On connaît des systèmes permettant d'accéder à des sites Internet dans lesquels l'utilisateur d'un téléphone mobile se connecte à un serveur qui lui permet d'établir un contact avec d'autres serveurs et d'obtenir des informations.

Il existe par exemple des systèmes de navigation comprenant un serveur WEB, un navigateur WEB et un dispositif de reconnaissance vocale couplant le serveur avec un réseau de téléphonie mobile. Le dispositif de reconnaissance vocale permet à un usager du réseau de recevoir sur un navigateur Web des données graphiques fournies par le serveur, en fonction de commandes vocales émises par l'usager. Ce système de navigation permet à un utilisateur de téléphone mobile de se connecter au serveur et de formuler des ordres de navigation ou de téléchargement en langage naturel.

Dans de tels systèmes, la voix de l'utilisateur est convertie en un signal « données » et est transmise au serveur via un canal « données » du réseau.

Un tel système est décrit dans EP-0 676 882

Un inconvénient de ces systèmes est que dans certaines situations, la transmission de la voix par le canal « données » peut être perturbée, ce qui génère des erreurs dans le signal transmis.

Il en résulte que le dispositif de reconnaissance vocal n'est pas capable d'identifier correctement les mots prononcés par l'utilisateur. Cet inconvénient est d'autant plus gênant que l'utilisateur utilise des services payants.

Un but de l'invention est de permettre à un utilisateur de téléphone mobile d'utiliser les services offerts par un réseau de téléphonie mobile même lorsque la qualité de la transmission de la voix sur le canal « données » est insuffisante.

A cet effet, l'invention propose un procédé d'accès à un service via un réseau de téléphonie mobile, selon lequel on entre des instructions au moyen d'un téléphone mobile et on transmet les instructions par un canal données du réseau de téléphonie mobile vers un serveur, un dispositif de reconnaissance vocale étant apte à interpréter les instructions et le serveur étant apte à effectuer une tâche en fonction de cette interprétation, caractérisé en ce qu'on mesure un paramètre relatif à la qualité de la transmission du canal données du réseau, et en ce que :
- dans le cas où le paramètre de qualité est supérieur à un certain seuil, on fait passer le téléphone dans un mode de fonctionnement selon lequel il est apte à prendre en compte des instructions sous forme vocale et à les convertir en données pour les transmettre au serveur,
- dans le cas où le paramètre de qualité est inférieur au seuil, on fait passer le téléphone dans un mode de fonctionnement selon lequel on entre les instructions sous forme graphique (en utilisant par exemple le clavier du téléphone ou un stylet sur un écran tactile) et on transmet les instructions au serveur.

Un tel procédé permet avantageusement de passer d'un mode « multimodal » selon lequel l'utilisateur peut formuler des requêtes en langage naturel ou graphiquement, à un mode exclusivement « graphique », selon lequel il sélectionne ou saisit une instruction en utilisant le clavier de son téléphone mobile ou un stylet, lorsque la qualité de la liaison données n'est pas suffisante pour transmettre des instructions vocales.

Selon un mode de réalisation de l'invention, pour mesurer un paramètre relatif à la qualité du réseau, on envoie un message de test et, après réception, on le compare à un message de référence, on en déduit un paramètre de qualité de transmission du canal données.

Notamment, on détermine le paramètre de qualité de transmission en fonction du taux d'erreur dans le message reçu par rapport au message de référence.

Selon un autre mode de mise en oeuvre du procédé de l'invention, on détermine le paramètre de transmission en fonction de la gigue, la latence ou le taux d'erreur binaire mesurée lors d'une transmission de données sur le canal données du réseau de téléphonie mobile.

Selon un autre mode de mise en oeuvre, pour mesurer un paramètre relatif à la qualité du réseau, on envoie un message de test et on mesure un temps de transmission du message, on en déduit un paramètre de qualité de la transmission du canal données.

Le temps de transmission du message mesuré peut avantageusement être le temps entre l'émission du message et la réception du message par le réseau.

Selon un autre mode de mise en oeuvre, pour mesurer un paramètre relatif à la qualité du réseau, on détecte des variations de la quantité de données dans une mémoire tampon de sortie du téléphone et on en déduit un paramètre d'encombrement ou de congestion du canal données.

Selon un autre mode de mise en oeuvre encore, pour mesurer un paramètre relatif à la qualité du réseau, on envoie un message de test et on calcule pour chaque paquet de données envoyé, la valeur de la somme des bits assignés dans ce paquet (checksum), cette valeur étant transmise au serveur avec le paquet de données et lorsque le serveur reçoit le message de test, il calcule pour chaque paquet de données reçu, la valeur de la somme des bits assignés à ce paquet, il la compare à la valeur transmise et en déduit un paramètre de perte en transmission du réseau.

De manière avantageuse, on affiche sur l'écran du téléphone mobile des informations relatives à la qualité de transmission du canal données.

Par exemple, on présente les informations à l'écran sous la forme d'un indicateur de qualité.

L'invention propose également un téléphone mobile comprenant des moyens pour recevoir des instructions sous forme vocale et les convertir en données pour les transmettre à un réseau, caractérisé en ce qu'il comprend des moyens pour mesurer un paramètre relatif à la qualité de la liaison données du réseau de téléphonie mobile et en fonction de ce paramètre, le téléphone est apte à passer dans l'un ou l'autre des modes de fonctionnements définis précédemment.

Selon un mode de réalisation, le téléphone mobile comprend des moyens pour générer un message de test sur le canal données du réseau de téléphonie mobile, ainsi que des moyens de traitement pour comparer un message qui lui est renvoyé à un message de référence et pour en déduire un taux d'erreur de transmission dans le message renvoyé.

Selon un autre mode de réalisation de l'invention, le téléphone mobile comprend des moyens pour générer un message de test sur le canal données du réseau de téléphonie mobile, ainsi que des moyens de traitement pour mesurer un intervalle de temps entre l'émission du message de test et la réception d'un message qui lui est renvoyé.

Avantageusement, le téléphone mobile peut comprendre des moyens pour indiquer à l'utilisateur une information relative à la qualité de la liaison données mesurée.

Par ailleurs, l'invention propose également un système d'accès à des services via un réseau de téléphonie mobile comprenant un téléphone mobile, un serveur de gestion connecté au réseau de téléphonie mobile, un dispositif de reconnaissance vocale, le téléphone mobile comprenant des moyens pour recevoir des instructions sous forme vocale et les convertir en données pour les transmettre au serveur via un canal données du réseau, le dispositif de reconnaissance vocale étant apte à interpréter les instructions et le serveur étant apte à effectuer une tâche en fonction de cette interprétation, caractérisé en ce qu'il comprend en outre des moyens pour mesurer un paramètre relatif à la qualité de la liaison données du réseau de téléphonie mobile et en fonction de ce paramètre, le téléphone est apte à passer dans l'un ou l'autre des modes de fonctionnements définis précédemment.

Dans une mise en oeuvre de l'invention, les moyens pour mesurer un paramètre relatif à la qualité de la liaison données comprennent des moyens pour générer un message de test sur le canal données du réseau de téléphonie mobile et des moyens pour recevoir ce message de test, ainsi que des moyens de traitement pour comparer le message reçu à un message de référence et pour en déduire un taux d'erreur de transmission dans le message reçu.

Dans une autre mise en oeuvre de l'invention, les moyens pour mesurer un paramètre relatif à la qualité de la liaison données comprennent des moyens pour générer un message de test sur le canal données du réseau de téléphonie mobile et des moyens pour recevoir ce message de test, ainsi que des moyens de traitement pour mesurer un intervalle de temps entre l'émission du message de test et sa réception.

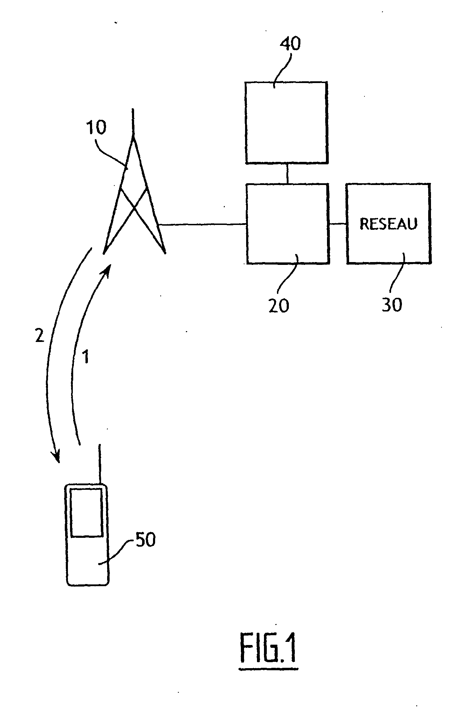

D'autres caractéristiques et avantages ressortiront encore de la description qui suit, laquelle est purement illustrative et doit être lue en regard de la figure 1 annexée qui représente un dispositif de navigation sur Internet conforme à un mode de réalisation de l'invention.

Sur la figure 1, le dispositif de navigation comprend un serveur de gestion 20 connecté à un réseau de téléphonie mobile 10. Ce serveur de gestion est également connecté à un dispositif de reconnaissance et de synthèse vocale 40 et à un réseau d'informations 30 de type Internet par exemple.

L'utilisateur d'un téléphone mobile 50 à la recherche d'un service peut se connecter au serveur de gestion 20 en navigant sur le WEB, le WAP ou l'i-mode ou en commandant l'accès direct à ce serveur 20. Le téléphone mobile 50 comprend un canal données et éventuellement un canal voix.

Une page s'affiche sur l'écran du téléphone mobile 50 indiquant à l'utilisateur qu'il peut rechercher un service en formulant une requête verbale. Ce service peut par exemple consister en la recherche d'informations, le téléchargement d'un film, d'une séquence vidéo ou sonore (émission de radio ou de télévision, musique), d'une animation, d'un programme, etc.

Lorsque l'utilisateur accède à une telle page, le serveur 20 est apte à recevoir une requête verbale de l'utilisateur et à commander le dispositif de reconnaissance vocale 40 pour que celui-ci traite la requête de l'utilisateur.

L'utilisateur prononce un mot ou une série de mots correspondant à sa requête. Sa requête est convertie par le téléphone 50 en paquets de données et est transmise au serveur d'accès 20 sous cette forme par le canal données du réseau. Le serveur d'accès 20 transmet la requête au dispositif de reconnaissance vocale 40. Le dispositif de reconnaissance vocale 40 reçoit et interprète la requête de l'utilisateur. Il renvoie au serveur d'accès 20 une interprétation de la requête de l'utilisateur.

En fonction de cette interprétation, le serveur 20 est apte à établir des connexions avec d'autres serveurs du réseau 30 proposant des services ou avec des bases de données.

Par exemple, l'utilisateur peut consulter des informations de guidage géographique. Il se connecte à un service WEB, WAP ou i-mode en mode « graphique » en utilisant le clavier de son téléphone ou encore un stylet lorsque son téléphone possède un écran tactile. Lorsqu'il est connecté à ce service, une page s'affiche sur son écran lui indiquant les informations qu'il peut fournir sous forme de champs à remplir. Il peut alors énoncer des informations concernant un lieu où il souhaite se rendre. Le serveur traite sa demande et renvoie à l'utilisateur un plan du lieu choisi.

L'utilisateur peut être guidé par des messages audio pré-enregistrés ou générés par le dispositif de synthèse vocale 40 ou encore par des commandes graphiques lui indiquant des consignes de guidage. L'utilisateur répond aux questions qui permettront de remplir des champs dans l'interface visuelle du téléphone ou encore de déclencher l'activation d'un lien ou d'un changement de page.

Dans une mise en oeuvre de l'invention, le téléphone mobile 50 comprend des moyens de traitement aptes à mesurer un paramètre représentatif de la qualité de la liaison données. A cet effet, le téléphone est apte à générer un message de test 1 sur le canal données du réseau 10. Le serveur 20 reçoit le message et le renvoie vers le téléphone mobile 50. Au cours de cet échange, le message de test peut être détérioré. Le téléphone mobile compare le message 2 qu'il reçoit du réseau 10 avec un message de référence qui est par exemple le message 1 de test initial. Il en déduit un taux d'erreur de transmission. Le téléphone compare le taux d'erreur à un seuil pour déterminer si la qualité de la liaison est suffisante pour transmettre des messages vocaux.

Le message de test est par exemple un message générique transmis à intervalles réguliers par le téléphone mobile 50 de l'utilisateur au serveur.

D'autres paramètres peuvent être pris en compte pour déterminer la qualité de la liaison données. Par exemple, le téléphone peut chronométrer le temps de transmission aller-retour du message de test. Il compare ce temps avec un seuil pour en déduire si la qualité de la liaison est suffisante pour transmettre des messages vocaux.

Il peut également mesurer l'intervalle de temps entre l'émission du message de test et la réception du message par le réseau 10 et comparer cet intervalle de temps avec une valeur seuil pour en déduire la qualité de la liaison.

Le téléphone mobile 50 peut également détecter les variations de la quantité de données dans l'une de ses mémoires tampon de sortie et en déduire un paramètre d'encombrement ou de congestion du canal données.

Le téléphone mobile 50 peut également envoyer un message de test transmettre au serveur 10 avec les paquets de données correspondants à ce message une information relative à la valeur de la somme des bits assignés (cheksum) dans les paquets. Lorsque le serveur 10 reçoit le message de test, il calcule pour chaque paquet de données reçu, la valeur de la somme des bits assignés dans ce paquet. Il compare cette somme à la valeur transmise par le téléphone mobile 50 et en déduit un paramètre de perte en transmission du réseau. Ce paramètre de perte de transmission donne une indication quant à la qualité de la liaison données.

Bien-entendu, d'autres procédés d'évaluation de la qualité de la liaison données peuvent être utilisés. Il est par exemple possible, pour mesurer la qualité du réseau d'utiliser des techniques classiques de mesure de gigue, de latence ou encore d'erreur binaire lors d'une transmission d'informations sur le canal données.

Ces différents procédés d'évaluation peuvent être également combinés pour en déduire un paramètre de qualité de la liaison données sur plusieurs critères.

Dans le cas où la qualité de la liaison données n'est pas suffisante, le téléphone 50 indique à l'utilisateur que la navigation en mode vocal n'est pas possible et qu'il passe en navigation en mode graphique. Un message s'affiche sur l'écran du téléphone 50 pour avertir l'utilisateur.

Ce passage du mode « multimodal » en mode exclusivement « graphique » peut être commandé par le serveur 20. Toutefois, il est de préférence commandé par le téléphone mobile 50 dans la mesure où la communication avec le serveur 20 est dégradée.

Selon le mode de navigation « graphique », l'utilisateur sélectionne ou saisit des instructions en utilisant le clavier de son téléphone mobile.

L'envoi d'un signal de test 1 et la mesure de la qualité de la liaison données peuvent être réalisés de manière périodique. De cette manière, le téléphone passe d'un mode de navigation graphique à un mode vocal et réciproquement en fonction de la qualité de la liaison sans interrompre la navigation.

Le téléphone 50 peut avantageusement comporter un indicateur de qualité qui s'affiche sur l'écran pour informer en permanence l'utilisateur de la qualité de la liaison données. Cet indicateur peut se présenter sous la forme d'un témoin, d'un diagramme, d'un indice, ou sous toute autre forme.

Dans une variante de l'invention, c'est le serveur 20 qui détermine la qualité de la liaison données entre le téléphone 50 et le réseau 10. A cet effet, le téléphone génère un message de test sur le canal données du réseau 10. Le serveur 20 reçoit le message et le compare à un message de référence, ce message de référence pouvant être identique au message de test initialement généré par le téléphone. Il en déduit un taux d'erreur de transmission. Il renvoie ensuite au téléphone 50 un message contenant des informations sur la qualité de la liaison données du réseau 10.

Dans une autre variante de l'invention, c'est le serveur 20 qui génère un message de test. Le téléphone 50 peut directement déterminer la qualité de la liaison données du réseau en le comparant à un message de référence ou le renvoyer au serveur 20 pour que celui-ci détermine cette qualité.

## Revendications

1. Procédé d'accès à un service via un réseau de téléphonie mobile (10), selon lequel on entre des instructions au moyen d'un téléphone mobile (50) et on transmet les instructions par un canal données du réseau de téléphonie mobile (10) vers un serveur (20), un dispositif de reconnaissance vocale (40) étant apte à interpréter les instructions et le serveur (20) étant apte à effectuer une tâche en fonction de cette interprétation, **caractérisé en ce qu'**on mesure un paramètre relatif à la qualité de la transmission du canal données du réseau (10), et **en ce que** :
- dans le cas où le paramètre de qualité est supérieur à un certain seuil, on fait passer le téléphone (50) dans un mode de fonctionnement selon lequel il est apte à prendre en compte des instructions sous forme vocale et à les convertir en données pour les transmettre au serveur (20),
- dans le cas où le paramètre de qualité est inférieur au seuil, on fait passer le téléphone (50) dans un mode de fonctionnement selon lequel on entre les instructions sous forme graphique et on transmet les instructions au serveur (20).

2. Procédé selon la revendication 1, **caractérisé en ce que** pour mesurer un paramètre relatif à la qualité du réseau, on envoie un message de test (1) et, après réception, on le compare à un message de référence, on en déduit un paramètre de qualité de transmission du canal données.

3. Procédé selon la revendication 2, **caractérisé en ce qu'**on détermine le paramètre de qualité de transmission en fonction du taux d'erreur dans le message reçu par rapport au message de référence.

4. Procédé selon la revendication 2, **caractérisé en ce qu'**on détermine le paramètre de transmission en fonction de la gigue, la latence ou le taux d'erreur binaire mesurée lors d'une transmission de données sur le canal données.

5. Procédé selon la revendication 1, **caractérisé en ce que** pour mesurer un paramètre relatif à la qualité du réseau, on envoie un message de test (1) et on mesure un temps de transmission du message, on en déduit un paramètre de qualité de la transmission du canal données.

6. Procédé selon la revendication 4, **caractérisé en ce que** le temps de transmission du message mesuré est le temps entre l'émission du message et la réception du message par le réseau (10).

7. Procédé selon la revendication 1, **caractérisé en ce que** pour mesurer un paramètre relatif à la qualité du réseau, on détecte les variations de la quantité de données dans une mémoire tampon de sortie du téléphone mobile (50) et on en déduit un paramètre d'encombrement ou de congestion du canal données.

8. Procédé selon la revendication 1, **caractérisé en ce que** pour mesurer un paramètre relatif à la qualité du réseau, on envoie un message de test et on calcule pour chaque paquet de données envoyé, la valeur de la somme des bits assignés dans ce paquet, cette valeur étant transmise au serveur (20) avec le paquet de données et lorsque le serveur (20) reçoit le message de test, il calcule pour chaque paquet de données reçu, la valeur de la somme des bits assignés à ce paquet, il la compare à la valeur transmise et en déduit un paramètre de perte en transmission du réseau.

9. Procédé selon l'une des revendications qui précèdent,
**caractérisé en ce qu'**on affiche sur l'écran du téléphone mobile (50) des informations relatives à la qualité de transmission du canal données.

10. Procédé selon la revendication 9, **caractérisé en ce que** l'on présente les informations à l'écran sous la forme d'un indicateur de qualité.

11. Téléphone mobile (50) comprenant des moyens pour recevoir des instructions sous forme vocale et les convertir en données pour les transmettre à un réseau (10), **caractérisé en ce qu'**il comprend des moyens pour mesurer un paramètre relatif à la qualité de la liaison données du réseau de téléphonie mobile (10) et en fonction de ce paramètre, le téléphone (50) est apte à passer dans l'un ou l'autre des modes de fonctionnements définis à la revendication 1.

12. Téléphone mobile selon la revendication 11, **caractérisé en ce qu'**il comprend des moyens pour générer un message de test (1) sur le canal données du réseau de téléphonie mobile (10), ainsi que des moyens de traitement pour comparer un message qui lui est renvoyé (2) à un message de référence et pour en déduire un taux d'erreur de transmission dans le message renvoyé.

13. Téléphone mobile selon la revendication 12, **caractérisé en ce qu'**il comprend des moyens pour générer un message de test (1) sur le canal données du réseau de téléphonie mobile (10), ainsi que des moyens de traitement pour mesurer un intervalle de temps entre l'émission du message de test (1) et la réception d'un message (2) qui lui est renvoyé.

14. Téléphone mobile selon l'une des revendications 11 à 13, **caractérisé en ce qu'**il comprend des moyens pour indiquer à l'utilisateur une information relative à la qualité de la liaison données mesurée.

15. Système d'accès à des services via un réseau de téléphonie mobile (10) comprenant un téléphone mobile (50), un serveur de gestion (20) connecté au réseau de téléphonie mobile (10), un dispositif de reconnaissance vocale (40), le téléphone mobile (50) comprenant des moyens pour recevoir des instructions sous forme vocale et les convertir en données pour les transmettre au serveur (20) via un canal données du réseau (10), le dispositif de reconnaissance vocale (40) étant apte à interpréter les instructions et le serveur étant apte à effectuer une tâche en fonction de cette interprétation, **caractérisé en ce qu'**il comprend en outre des moyens pour mesurer un paramètre relatif à la qualité de la liaison données du réseau de téléphonie mobile (10) et en fonction de ce paramètre, le téléphone (50) est apte à passer dans l'un ou l'autre des modes de fonctionnements définis à la revendication 1.

16. Système d'accès selon la revendication 15, **caractérisé en ce que** les moyens pour mesurer un paramètre relatif à la qualité de la liaison données comprennent des moyens pour générer un message de test (1) sur le canal données du réseau de téléphonie mobile (10) et des moyens pour recevoir ce message de test (2), ainsi que des moyens de traitement pour comparer le message reçu (2) à un message de référence et pour en déduire un taux d'erreur de transmission dans le message reçu.

17. Système d'accès selon la revendication 15, **caractérisé en ce que** les moyens pour mesurer un paramètre relatif à la qualité de la liaison données comprennent des moyens pour générer un message de test (1) sur le canal données du réseau de téléphonie mobile (10) et des moyens pour recevoir ce message de test (2), ainsi que des moyens de traitement pour mesurer un intervalle de temps entre l'émission du message de test et sa réception.

## Claims

1. A method of accessing a service via a mobile telephone network (10) in which instructions are input by means of a mobile telephone (50) and the instructions are transmitted over a data channel of the mobile telephone network (10) to a server (20), voice recognition means (40) being suitable for interpreting the instructions, and the server (20) being suitable for performing a task as a function of such interpretation, the method being **characterized in that** a parameter relating to the quality of transmission over the data channel of the network (10) is measured, and **in that**:
. if the quality parameter is above a certain threshold, the telephone (50) is put into a mode of operation in which it is capable of taking account of instructions in voice form and of converting them into data for transmission to the server (20); and
.in the event of the quality parameter being below the threshold, the telephone (50) is put into a mode of operation in which instructions are input in graphics form and the instructions are transmitted to the server (20).

2. A method according to claim 1, **characterized in that** in order to measure a parameter relating to the quality of the network, a test message (1) is sent, and after being received it is compared with a reference message, and a data channel transmission quality parameter is deduced therefrom.

3. A method according to claim 2, **characterized in that** the transmission quality parameter is determined as a function of the error rate in the received message relative to the reference message.

4. A method according to claim 2, **characterized in that** the transmission parameter is determined as a function of jitter, latency, or binary error rate measured during data transmission over the data channel.

5. A method according to claim 1, **characterized in that** in order to measure a parameter relating to network quality, a test message (1) is sent and transmission time of the message is measured, with a data channel transmission quality parameter being deduced therefrom.

6. A method according to claim 4, **characterized in that** the measured message transmission time is the time between the message being sent and the message being received by the network (10).

7. A method according to claim 1, **characterized in that** in order to measure a parameter relating to network quality, variations are detected in the quantity of data in an output buffer memory of the mobile telephone (50), and an occupation or congestion parameter for the data channel is deduced therefrom.

8. A method according to claim 1, **characterized in that** in order to measure a parameter relating to the quality of the network, a test message is sent and for each data packet sent, the value is calculated of the checksum relating to the bits in the packet, this value being transmitted to the server (20) together with the data packet, and when the server (20) receives the test message, it calculates for each received data packet the value of the checksum for the bits of the packet, it compares the calculated value with the transmitted value, and it deduces therefrom a network transmission loss parameter.

9. A method according to any preceding claim, **characterized in that** information is displayed on the screen of the mobile telephone (50) relating to the transmission quality of the data channel.

10. A method according to claim 9, **characterized in that** the information is presented on the screen in the form of a quality indicator.

11. A mobile telephone (50) including means for receiving instructions in voice form and for converting them into data for transmission to a network (10), the telephone being **characterized in that** it includes means for measuring a parameter relating to the quality of the data link of the mobile telephone network (10), and as a function of said parameter the mobile telephone (50) is suitable for switching between one and the other of the modes of operation defined in claim 1.

12. A mobile telephone according to claim 11, **characterized in that** it includes means for generating a test message (1) over the data channel of the mobile telephone network (10), and processor means for comparing a message (2) which is returned thereto with a reference message and for deducing therefrom a transmission error rate in the returned message.

13. A mobile telephone according to claim 12, **characterized in that** it includes means for generating a test message (1) over the data channel of the mobile telephone network (10), and processor means for measuring a time interval between sending the test message (1) and receiving a message (2) which is returned thereto.

14. A mobile telephone according to any one of claims 11 to 13, **characterized in that** it includes means for giving the user information relating to the measured quality of the data link.

15. An access system for accessing services via a mobile telephone network (10), the system comprising a mobile telephone (50), a management server (20) connected to the mobile telephone network (10), and voice recognition means (40), the mobile telephone (50) including means for receiving instructions in voice form and for converting them into data for transmission to the server (20) over a data channel of the network (10), the voice recognition means (40) being suitable for interpreting the instructions, and the server being suitable for performing a task as a function of said interpretation, the system being **characterized in that** it further comprises means for measuring a parameter relating to the quality of the data link of the mobile telephone network (10), and as a function of this parameter, the telephone (50) is suitable for passing between one and the other of the modes of operation defined in claim 1.

16. An access system according to claim 15, **characterized in that** the means for measuring a parameter relating to the quality of the data link include means for generating a test message (1) over the data channel of the mobile telephone network (10) and means for receiving said test message (2), together with processor means for comparing the received message (2) with a reference message and for deducing therefrom a transmission error rate in the received message.

17. An access system according to claim 15, **characterized in that** the means for measuring a parameter relating to the quality of the data link include means for generating a test message (1) over the data channel of the mobile telephone network (10) and means for receiving the test message (2), together with processor means for measuring a time interval between the test message being sent and being received.

## Patentansprüche

1. Verfahren zum Zugriff auf einen Dienst über ein Mobiltelefonnetz (10), gemäß dem Anweisungen mittels eines Mobiltelefons (50) eingegeben werden und die Anweisungen über einen Datenkanal des Mobiltelefonnetzes (10) zu einem Server (20) übertragen werden, wobei eine Spracherkennungsvorrichtung (40) dafür eingerichtet ist, die Anweisungen zu interpretieren und der Server (20) dafür eingerichtet ist, in Abhängigkeit von dieser Interpretation eine Aufgabe auszuführen, **dadurch gekennzeichnet, daß** ein Parameter gemessen wird, der sich auf die Qualität der Übertragung des Datenkanals des Netzes (10) bezieht, und **dadurch**, daß:
- im Fall, daß der Qualitätsparameter größer als ein bestimmter Schwellwert ist, veranlaßt wird, daß das Telefon (50) in einen Arbeitsmodus wechselt, in dem es dafür eingerichtet ist, Anweisungen in Sprachform zu berücksichtigen und sie in Daten umzuwandeln, um sie zum Server (20) zu übertragen,
- im Fall, daß der Qualitätsparameter kleiner als der Schwellwert ist, veranlaßt wird, daß das Telefon (50) in einen Arbeitsmodus wechselt, in dem die Anweisungen in grafischer Form eingegeben und die Anweisungen an den Server (20) übertragen werden.

2. Verfahren nach Anspruch 1, **dadurch gekennzeichnet, daß** zum Messen eines Parameters, der sich auf die Netzqualität bezieht, eine Testnachricht (1) verschickt und diese nach dem Empfang mit einer Referenznachricht verglichen wird und daraus ein Parameter zur Übertragungsqualität des Datenkanals abgeleitet wird.

3. Verfahren nach Anspruch 2, **dadurch gekennzeichnet, daß** der Übertragungsqualitätsparameter als Funktion der Fehlerrate in der empfangenen Nachricht relativ zur Referenznachricht bestimmt wird.

4. Verfahren nach Anspruch 2, **dadurch gekennzeichnet, daß** der Übertragungsparameter als Funktion des Jitters, der Latenzzeit oder der binären Fehlerrate bestimmt wird, die bei einer Datenübertragung über den Datenkanal gemessen werden.

5. Verfahren nach Anspruch 1, **dadurch gekennzeichnet, daß** zum Messen eines Parameters, der sich auf die Netzqualität bezieht, eine Testnachricht (1) verschickt und eine Übertragungszeit der Nachricht gemessen wird und daraus ein Parameter zur Übertragungsqualität des Datenkanals abgeleitet wird.

6. Verfahren nach Anspruch 4, **dadurch gekennzeichnet, daß** die gemessene Übertragungszeit der Nachricht die Zeit zwischen dem Aussenden der Nachricht und dem Empfangen der Nachricht durch das Netz (10) ist.

7. Verfahren nach Anspruch 1, **dadurch gekennzeichnet, daß** zum Messen eines Parameters, der sich auf die Netzqualität bezieht, die Schwankungen der Datenmenge in einem Ausgangspufferspeicher des Mobiltelefons (50) bestimmt werden und daraus ein Parameter für die Stockung oder Überlastung des Datenkanals abgeleitet wird.

8. Verfahren nach Anspruch 1, **dadurch gekennzeichnet, daß** zum Messen eines Parameters, der sich auf die Netzqualität bezieht, eine Testnachricht verschickt und für jedes verschickte Datenpaket der Wert der Summe der diesem Paket zugeordneten Bits berechnet wird, wobei dieser Wert mit dem Datenpaket zum Server (20) übertragen wird, und wenn der Server (20) die Testnachricht empfängt, dieser für jedes empfangene Datenpaket den Wert der Summe der diesem Paket zugeordneten Bits berechnet, er sie mit dem übertragenen Wert vergleicht und daraus einen Parameter für den Verlust bei der Übertragung im Netz ableitet.

9. Verfahren nach einem der vorhergehenden Ansprüche, **dadurch gekennzeichnet, daß** auf der Anzeige des Mobiltelefons (50) Informationen angezeigt werden, die die Übertragungsqualität des Datenkanals betreffen.

10. Verfahren nach Anspruch 9, **dadurch gekennzeichnet, daß** die Informationen auf der Anzeige in Form einer Qualitätsanzeige dargestellt werden.

11. Mobiltelefon (50), das Mittel umfaßt, um Anweisungen in Sprachform zu empfangen und sie in Daten umzuwandeln, um sie an ein Netz (10) zu übertragen, **dadurch gekennzeichnet, daß** es Mittel umfaßt, um einen Parameter zu messen, der sich auf die Qualität der Datenverbindung des Mobiltelefonnetzes (10) bezieht, und wobei das Telefon (50) dafür eingerichtet ist, in Abhängigkeit von diesem Parameter in den einen oder den anderen der Arbeitsmodi zu wechseln, die im Anspruch 1 definiert sind.

12. Mobiltelefon nach Anspruch 11, **dadurch gekennzeichnet, daß** es Mittel zum Erzeugen einer Testnachricht (1) auf dem Datenkanal des Mobiltelefonnetzes (10) umfaßt, sowie Verarbeitungsmittel, um eine Nachricht, die ihm zurückgesendet wird (2), mit einer Referenznachricht zu vergleichen und daraus eine Übertragungsfehlerrate in der zurückgesandten Nachricht abzuleiten.

13. Mobiltelefon nach Anspruch 12, **dadurch gekennzeichnet, daß** es Mittel zum Erzeugen einer Testnachricht (1) auf dem Datenkanal des Mobiltelefonnetzes (10) umfaßt, sowie Verarbeitungsmittel, um ein Zeitintervall zwischen dem Aussenden der Testnachricht (1) und dem Empfangen einer Nachricht (2), die ihm zurückgesendet wird, zu messen.

14. Mobiltelefon nach einem der Ansprüche 11 bis 13, **dadurch gekennzeichnet, daß** es Mittel umfaßt, um dem Benutzer eine Information anzuzeigen, die die gemessene Qualität der Datenverbindung betrifft.

15. System zum Zugriff auf Dienste über ein Mobiltelefonnetz (10), das ein Mobiltelefon (50), einen mit dem Mobiltelefonnetz (10) verbundenen Verwaltungsserver (20) und eine Spracherkennungsvorrichtung (40) umfaßt, wobei das Mobiltelefon (50) Mittel umfaßt, um Anweisungen in Sprachform zu empfangen und sie in Daten umzuwandeln, um sie über einen Datenkanal des Netzes (10) zum Server (20) zu übertragen, wobei die Spracherkennungsvorrichtung (40) dafür eingerichtet ist, die Anweisungen zu interpretieren und der Server (20) dafür eingerichtet ist, in Abhängigkeit von dieser Interpretation eine Aufgabe auszuführen, **dadurch gekennzeichnet, daß** es außerdem Mittel umfaßt, um einen Parameter zu messen, der sich auf die Qualität der Datenverbindung des Mobiltelefonnetzes (10) bezieht, und wobei das Telefon (50) dafür eingerichtet ist, in Abhängigkeit von diesem Parameter in den einen oder den anderen der Arbeitsmodi zu wechseln, die im Anspruch 1 definiert sind.

16. System zum Zugriff nach Anspruch 15, **dadurch gekennzeichnet, daß** die Mittel zum Messen eines Parameters, der die Qualität der Datenverbindung betrifft, Mittel zum Erzeugen einer Testnachricht (1) auf dem Datenkanal des Mobiltelefonnetzes (10) und Mittel zum Empfangen dieser Testnachricht (2) umfassen, sowie Verarbeitungsmittel, um die empfangene Nachricht (2) mit einer Referenznachricht zu vergleichen und daraus eine Übertragungsfehlerrate in der empfangenen Nachricht abzuleiten.

17. System zum Zugriff nach Anspruch 15, **dadurch gekennzeichnet, daß** die Mittel zum Messen eines Parameters, der die Qualität der Datenverbindung betrifft, Mittel zum Erzeugen einer Testnachricht (1) auf dem Datenkanal des Mobiltelefonnetzes (10) und Mittel zum Empfangen dieser Testnachricht (2) umfassen, sowie Verarbeitungsmittel, um ein Zeitintervall zwischen dem Aussenden der Testnachricht und ihrem Empfangen zu messen
